# EUROPEAN PATENT APPLICATION

(11) **EP 2 157 715 A1**
(43) Date of publication of application: **24.02.2010**
(21) Application number: 08014680.6
(22) Date of filing: 19.08.2008
(51) Int. Cl.: H04B 10/17, H04J 14/02

(54) **A method for equalization of transients in an input optical signal**

(71) Applicant: Danmarks Tekniske Universitet (DTU), 2800 Kgs. Lyngby (DK)
(72) Inventor: KjÆr, Rasmus, 1370 København K (DK); Oxenløwe, Leif Katsuo, 3400 Hillerød (DK)
(74) Representative: Sundien, Thomas

(57) **Abstract**

Systems and methods are disclosed for polarization insensitive equalization of transients in an optical signal. The input optical signal has an input signal center frequency and an input signal bandwidth. The method includes passing the input optical signal through a non-linear optical waveguide to obtain a self-phase modulated optical signal. The method further includes filtering the self-phase modulated optical signal by a band pass filter. The band pass filter is centered at the input signal center frequency. In addition, the band pass filter has a band pass bandwidth equal or at least similar to the input signal bandwidth. The filtering results in a generation of equalized output optical signal.

## Description

### FIELD OF THE INVENTION

The present invention relates to optical communication systems. More particularly, embodiments of the invention relate to systems and methods for removing power transients from an optical signal.

### BACKGROUND

In modern telecommunication networks, an optical signal, while being transmitted, switched, multiplexed, de-multiplexed, etc. is subjected to varying levels of distortions. Typically, one or more components, for example switches, amplifiers, etc. in an optical communication system introduce transients in the optical signal. A "transient", in the ongoing context, includes sudden and unwanted excursion in average optical power of the optical signal.

Power transients typically occur at the output of a saturated optical amplifier when the input power to the amplifier changes abruptly. A sudden change in input power occurs, for instance, when one or more optical channels are switched in or out of the optical fiber by means of a reconfigurable optical add/drop multiplexer (ROADM). In general, all fiber-based transmission lines carry several optical wavelength channels on the same fiber - a technology referred to as "wavelength division multiplexing (WDM)".

In particular, in saturated amplifiers in typical telecommunication networks, transient crosstalk is generated between adjacent optical channels, when average power fed (input) into the amplifier changes abruptly. Such a type of crosstalk can be a serious problem in today's reconfigurable networks where reconfigurable optical add/drop multiplexers (ROADMs) and optical cross connects are used for dynamic routing and switching of individual channels. Switching of the optical channels puts severe demands on the dynamic properties of network amplifiers (e.g. optical amplifiers), especially if the amplifier gain is not well-controlled at the channel-level.

Dynamic channel add/drops causes network amplifiers to respond with power transients at their outputs. Transients in power can arise in reconfigurable networks, where the use of switching nodes is an inherent part of the network, or as a result of channel reconfiguration, or simply due to discontinuous traffic. Power fluctuations can also occur due to network faults, such as cable cuts, etc.

Two optical signal channels propagating in the same active (i.e. amplifying) waveguide can induce crosstalk through cross gain modulation (XGM). XGM is a result of saturable gain inherent to all amplifiers and reflects that gain experienced by each channel draws upon same limited power reservoir. If the power reservoir is depleted by one channel, the gain of the neighboring channels will also be affected.

In general, transients are always unwanted in an optical communication system as they may impair the receiver sensitivity and may cause potential damage to the components of the telecommunication network or other optical communication systems. Transients may also increase the effect from system nonlinearities during transmission.

Existing systems and methods employ Automatic Gain Control (AGC) to mitigate this problem. Such systems still experience transients in newly deployed 40 Gbit/s networks. Also, automatic gain control keeps only the total gain constant and not the individual channel gains. Hence, the channel dependency of the gain control efficiency may lead to oscillations and instabilities in the channel power control. The transient magnitude and shape depends a lot on the amplifier configuration and how well the gain is controlled. Furthermore, in research, methods implement all-optical regeneration (thereby removing distortions) of data signals by utilizing the effect of self-phase modulation (SPM) of the data signal in a non-linear medium (NLM). Self-phase modulation causes the signals' frequency spectrum to broaden. The broadened frequency spectrum is subsequently filtered to pass only those pulses that fall within a selected bandwidth centered at a frequency, which is shifted away with respect to input data carrier frequency. Hence, the regeneration of an optical signal according to such a method involves wavelength conversion of the optical signal to a different wavelength (or frequency). Such wavelength conversions add expense and complexity to the network management, especially when several WDM channels are in use. A further problem is that off-carrier filtering is also highly power consuming since a large spectral broadening is required.

Other known electrical methods involve conversion of the optical signal to electrical signal and vice-versa before and after the processing (e.g. amplification) of the optical signal. This method involves high-speed electronic processing of each individual signal channel and is both expensive and power consuming.

It is therefore desirable to remove power transients and to prevent any further propagation of the transients in the optical network through purely optical means without wavelength conversion. Thus, what are needed are improved methods and systems for removing transients from optical signals, on a channel level, in a telecommunication network / optical communication network.

The subject matter claimed herein is not limited to embodiments that solve any disadvantages or that operate only in environments such as those described above. Rather, this background is only provided to illustrate one exemplary technology area where some embodiments described herein may be practiced.

### OBEJECT AND SUMMARY OF THE INVENTION

These and other limitations are overcome by embodiments of the present invention, which relates to systems and methods for equalization of transients in an optical signal. More particularly, embodiments of the invention relate to the removal of transients in average power of an optical signal. Embodiments of the invention may apply to telecommunication networks that include optical communication sub-systems, where an optical signal is subjected to distortions due to characteristics of the network components.

In the present documents there will be referred to transients and by transients is meant any temporal excursion from the average power of the optical signal.

The object of the present invention is to solve one or more of the problems described above.
Systems and methods are disclosed for equalization of transients in an input optical signal. The input optical signal is characterized by an input signal center frequency and an input signal bandwidth. In an implementation, the method includes passing the input optical signal through a non-linear optical waveguide, e.g. an optical silica fiber, to obtain a self-phase modulated optical signal. The method further includes filtering the self-phase modulated optical signal by a band pass filter centered at the input signal center frequency. The band pass filter has a band pass bandwidth similar to the input signal bandwidth. The filtering results in a generation of equalized output optical signal.

Additional features of the invention will be set forth in the description that follows, and in part will be obvious from the description, or may be learned by the practice of the invention. The features and advantages of the invention may be realized and obtained by means of the instruments and combinations particularly pointed out in the appended claims. These and other features of the present invention will become more fully apparent from the following description and appended claims or may be learned by the practice of the invention as set forth hereinafter.

### BRIEF DESCRIPTION OF THE DRAWINGS

To further clarify the above and other advantages and features of the present invention, a more particular description of the invention will be rendered by references to specific embodiments thereof, which are illustrated in the appended drawings. It is appreciated that these drawings depict only typical embodiments of the invention and are therefore not to be considered limiting of its scope. The invention will be described and explained with additional specificity and detail through the use of the accompanying drawings in which:
Figure 1 schematically illustrates an example arrangement in an optical communication system for equalization of transients in an optical signal;
Figure 2 schematically illustrates an example arrangement in an optical communication system whereby transients are introduced by a network amplifier and equalized using the proposed equalizer;
Figure 3 schematically illustrates an exemplary WDM signal equalizer and an arrangement of add-drop multiplexers and signal equalizers according to one embodiment;
Figure 4 graphically illustrates a set of waveforms to depict the way transients are generated in a network situation and how these look when a switched and a surviving channel are input into a saturated amplifier;
Figure 5 illustrates an exemplary method for equalization of transients in an optical signal;
Figure 6 illustrates an exemplary method for signal regeneration of a plurality of optical WDM channels.

### DETAILED DESCRIPTION OF THE PREFERRED EMBODIMENTS

Typical telecommunication networks include a transmission medium, e.g., optical fiber cables, to transmit an optical signal (data signal). The network deploys repeaters (or signal regenerators) after a pre-defined distance to amplify the optical signal which suffers from propagation loss. Also, with advancements in signal transmission technologies, optical communication systems utilize the same optical fiber to transmit multiple signals through Wavelength Division Multiplexing (WDM).

In a WDM scenario, two channels propagating in a same active waveguide can induce crosstalk through cross gain modulation (XGM). XGM is a characteristic of a saturated amplifier. Due to such inter-channel crosstalk, the optical signal gets distorted by transients thereby impending successful reception of optical signals and threatening safety of receiver equipments.

Embodiments of the invention relate to methods and systems for suppressing/removing transients in average power occurring in an optical signal. In an implementation, the method includes passing an optical signal (also referred to as "input optical signal" hereinafter) through a highly non-linear waveguide (e.g. a fiber) to obtain a self-phase modulated optical signal. For the purposes of ongoing description, self-phase modulation (SPM) refers to a nonlinear optical effect of light-matter interaction. An ultra short pulse of light (or optical signal), when travelling in a medium, will induce an intensity dependent variation of refractive index of the medium due to optical Kerr effect. Such a variation in refractive index produces a phase shift in the optical signal leading to a change in the frequency spectrum of the optical signal. Typically, the frequency spectrum of the optical signal broadens based on the intensity of the optical signal. That is, a high intensity optical signal will be broadened more as compared to a low intensity optical signal. The input optical signal is characterized by an input signal center frequency and an input signal bandwidth.

The method further includes filtering the self-phase modulated signal by a band pass filter centered at the input signal center frequency. The band pass filter has a filter width (bandwidth) equal or at least similar to the input signal bandwidth. The filtering results in a generation of equalized optical signal.

In an implementation, the band pass filter ensures that high intensity pulses (or optical signals) will be filtered relatively more than low intensity pulses. As a result, the band pass filter effectively causes pulses or optical signals of different magnitudes (intensities) to be equalized in power.

In contrast to the known methods for removing distortions from the input optical signal, the disclosed method ensures low power requirements and avoids unwanted wavelength conversion. The band pass filter signal provides an optical signal in a format that is limited to return-to-zero (RZ) format, where each pulse must go zero before the next pulse begins.

Disclosed systems and methods employ all optical components (i.e. no use of high-speed electronics) to equalize/reduce large and sudden variations (transients) in the average power of a high-speed optical data channel. In an implementation, disclosed methods equalize the transients in the average power of the data channel thereby mitigating the effects of switching components that would add/drop one or more of the optical signals in the optical channel.

### Exemplary Transient Equalizer

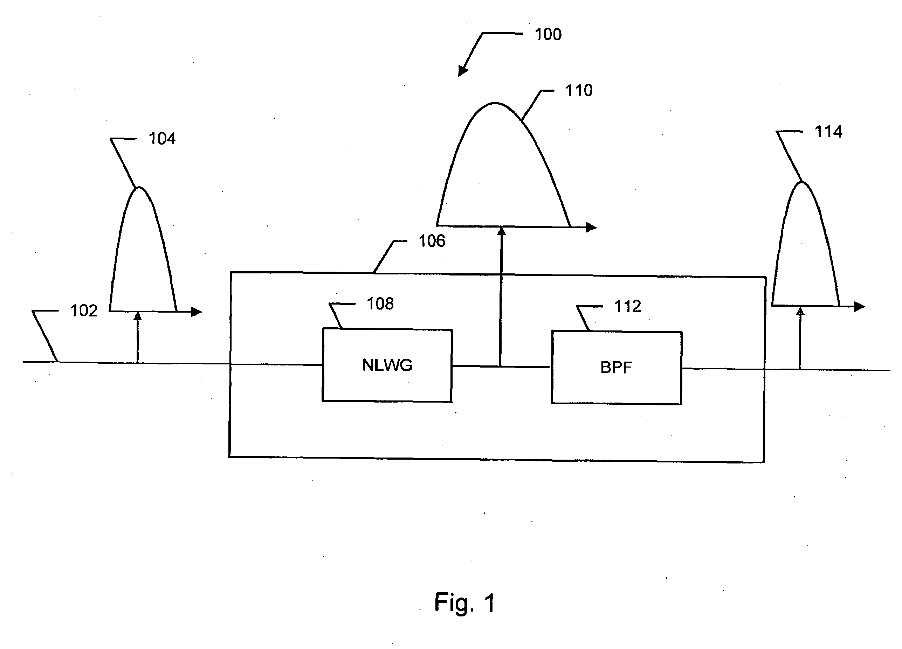

Fig 1 illustrates an arrangement 100 in an optical communication system for equalizing power transients in an optical signal. Such optical communication system may be implemented as a part of a modem telecommunication network. Accordingly, the arrangement 100 includes an optical fiber 102 for transmitting the input optical signal 104. The input signal 104 has been illustrated by its frequency spectrum in the figure. The signal format should be RZ, either in the form of on-off keying, phase-shift keying or frequency-shift keying

The input optical signal (104) is characterized by a center frequency, hereinafter referred to as "input signal center frequency". Signal bandwidth of the input optical signal is referred to as "input signal bandwidth". As discussed above, the input signal undergoes deterioration in terms of signal quality and magnitude (intensity) due to a multitude of factors in the optical communication system/telecommunication network. For purposes of ongoing description, the input optical signal 104 is considered to be affected at least by distortion due to inter-channel cross talk and/or output characteristics of saturated network amplifiers (e.g. optical amplifiers).

The arrangement 100 further includes a transient equalizer 106 configured to equalize unwanted power variations in the input optical signal 104. As shown in the figure, the input optical signal 104 is fed to the transient equalizer 106. The transient equalizer 106 includes a non-linear optical wave guide 108 configured to induce a self-phase modulation (SPM) in the input optical signal 104 to obtain a self-phase modulated optical signal 110. In an implementation, the non-linear wave guide 108 may be one of a bulky highly non-linear fiber, photonic crystal highly non-linear fiber, specially doped types of highly non-linear fiber/waveguides based on Silica (SiO2), Sulfur (S), Selenium (Se), Tellurium (Te) with Arsenic (As), Germanium (GE), Antimony (Sb) or Silicon (Si). If the input optical signal 104 has a sufficiently high pulse power, the frequency spectrum of the input optical signal is broadened due to Kerr-induced self-phase modulation (SPM) in the non-linear wave guide 106.

The arrangement 100 further includes a band pass filter 112 configured to receive the self-phase modulated signal 110 and filter out the unwanted frequency components lying outside the pass bandwidth. The bandwidth of the band pass filter 112 is set equal or at least similar to the input signal bandwidth. Also, the center frequency (f_{BPF}) of the band pass filter 112 is set equal or at least similar to the input signal center frequency (f_{C}).

As the self-phase modulated optical signal 110 passes through the band pass filter 112, the frequency spectrum of the self-phase modulated optical signal 110 is shaped to obtain a reduction of the transients in the output optical signal 114 (also referred to as "equalized output optical signal"). The equalized output optical signal 114 is then transmitted over the optical fiber 102. Also, the frequency components far away from the carrier of the self-phase modulated optical signal 110 are cut away. Therefore, a high power input optical signal 104 (or a self-phase modulated optical signal 110) will experience a large output power reduction due to filtering, while a low-power input optical signal 104 will pass through the band pass filter 112 practically unaltered.

In an implementation, the transient equalizer 106 relaxes input power requirements of the components in the optical network. The transient equalizer 106 also avoids unwanted wavelength conversion because the band pass filter 112 operates on the input signal center frequency (f_{C}). The transient equalizer 106 relies on the shift in instantaneous frequency across each pulse and hence can be implemented in equalization of uneven optical signal amplitudes for return to zero (RZ) based formats. In comparison to non-return to zero (NRZ) formats, RZ formats generally have a better non-linear tolerance and are typically preferred in high bit rate systems (> 10 Gbit/s).

In an implementation, the transient equalizer 106 is independent of the polarization of the input optical signal 104 and works at very high data rates due to the near-instantaneous Kerr-effect responsible for the self-phase modulation (SPM). SPM has, for instance, been used for all-optical wavelength conversions at a symbol rate of 160 Gbaud.

In an alternative implementation, the transient equalizer 106 can be optimized for different modulation formats and bit rates by changing the bandwidth of the band pass filter 112. As discussed above, the bandwidth of the band pass filter 112 is similar to the input signal bandwidth. In yet another example embodiment, aside from the bandwidth and shape of the band pass filter 112, optimization parameters of the transient equalizer 106 includes design parameters of the non-linear waveguide 108, such as non-linear coefficient (γ), length (L) and dispersion coefficient (D). Optimization of such parameters is based on a numerical model made by using known commercial tools, for example a tool from VPIphotonics. The tools were used to design the transient equalizer 106 by arriving at optimum values of the design parameters such as those mentioned above.

In an example the non-linear fiber 108 has a length (L) lying in a range of 1750m to 1850m. Also, the non-linear wave guide 108 has a length (L) of 1800m. Further, the transient equalizer 106 could include an optical band pass filter 112 that corresponds to a Gaussian-shaped filter with a full width at half maximum (FWHM) of about twice the bit rate; e.g. 80 GHz in case of a bit rate of 40 GB/S.

As discussed earlier, an optical signal is subjected to degradation in amplitude (intensity) due to signal attenuation and losses during propagation of the optical signal. Generally, signal repeaters are employed to restore the amplitude and maintain a high signal-to-noise ratio of the optical signal. Such signal repeaters include network amplifiers that typically introduce transients in output optical signals, particularly when the amplifier operates in saturated region as is the case with the widely used erbium-doped fiber amplifier (EDFA).

Disclosed systems and methods can be implemented in such a scenario to equalize or remove such transients independent of the polarization of the optical signal.

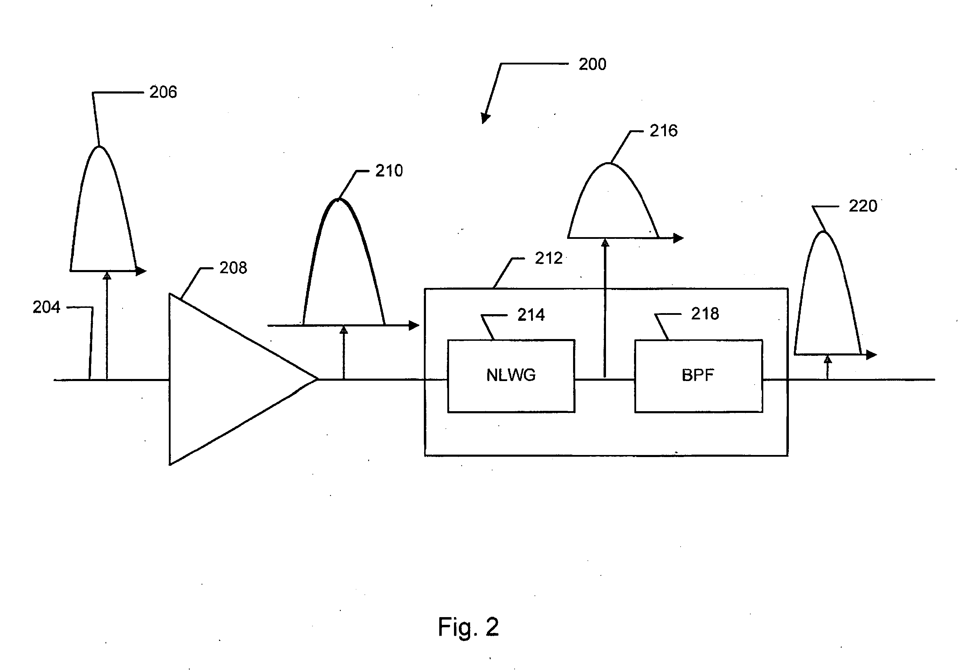

Figure 2 illustrates an arrangement 200 whereby transients are introduced in the input optical signal during amplification of the input optical signal by a saturated amplifier. Accordingly, optical fiber 204 transmits an input signal 206 which is amplified by a network amplifier 208 (e.g. optical amplifier). The network amplifier 208 amplifies the input optical signal 206 to obtain an amplified optical signal 210. The network amplifier 208, while operating in saturated region, introduces power transients at its output when there is a sudden add/drop or variation in the power of input optical signal 206. As discussed earlier, the dynamic switching and routing of an optical signal in an optical communication system results in sudden variation in power levels of input optical signal. When such a variation occurs at the input of the network amplifier 208, transients are introduced at the output of the network amplifier 208. Thus, the requirements on the characteristics of the amplifiers are high in terms of one or more of its figures of merit.

In a further implementation, a varying number of optical channels may be incident at the input terminal of the network amplifier 208. One or more of the optical channels may get more power than others depending on how many channels there are a given instant to share the available gain in the network amplifier. If there are fewer optical channels, each channel gets high amplification and if there are many channels, each channel gets low amplification. Output power transients occur when the amplifier gains changes from e.g. low to high amplification over a certain time span, which is determined by the amplifier dynamics.

The amplified optical signal 210 (which is impaired due to transients) is fed to a transient equalizer 212. The transient equalizer 212 includes a non-linear waveguide 214 (also referred to in this description as "non-linear optical waveguide") configured to induce self-phase modulation (SPM) in the amplified optical signal 210 to obtain a self-phase modulated optical signal 216. As a result of the self-phase modulation, the frequency spectrum of the amplified optical signal 210 is broadened. For example, when a high power optical signal (amplified optical signal 210) is fed to the non-linear waveguide 214, some of the excess power is transferred to frequency components positioned further away from the carrier. Subsequently, the self-phase modulated optical signal 216 is fed to an optical band pass filter 218. The center frequency of the optical band pass filter 218 is similar to the input signal center frequency and the filter bandwidth is similar to the input signal bandwidth. The optical band pass filter 218 cuts away the excess power in the self-phase modulated optical signal 216 to obtain an output optical signal 218 (also referred to herein as equalized signal). If there is not enough power in the amplified optical signal 210 to generate the additional spectral components (during SPM), the amplified optical signal 210 signal will not be broadened. Accordingly, there is no excess bandwidth to cut of, and the self-phase modulated signal will simply transfer/pass through the optical band pass filter 218 ideally without any alteration. If the pulse power is above the equalizer threshold power, the spectrum will be broadened. If the pulse power is below, no broadening will take place. The output optical signal 218 is at the input optical signal frequency and at a certain output power. The output optical signal 218 is transmitted through the optical fiber 204.

In an alternative embodiment, the transient equalizer 106 or 212 may be implemented just in front of an optical signal receiver to ensure that giant (high power) optical signal pulses never reach the detector in the receiver. As may be appreciated by those skilled in the art, typical photo detectors are highly sensitive to power and are prone to damages owing to high spikes or overshoots (transients) in an optical signal being detected.

### Exemplary Signal Equalizer

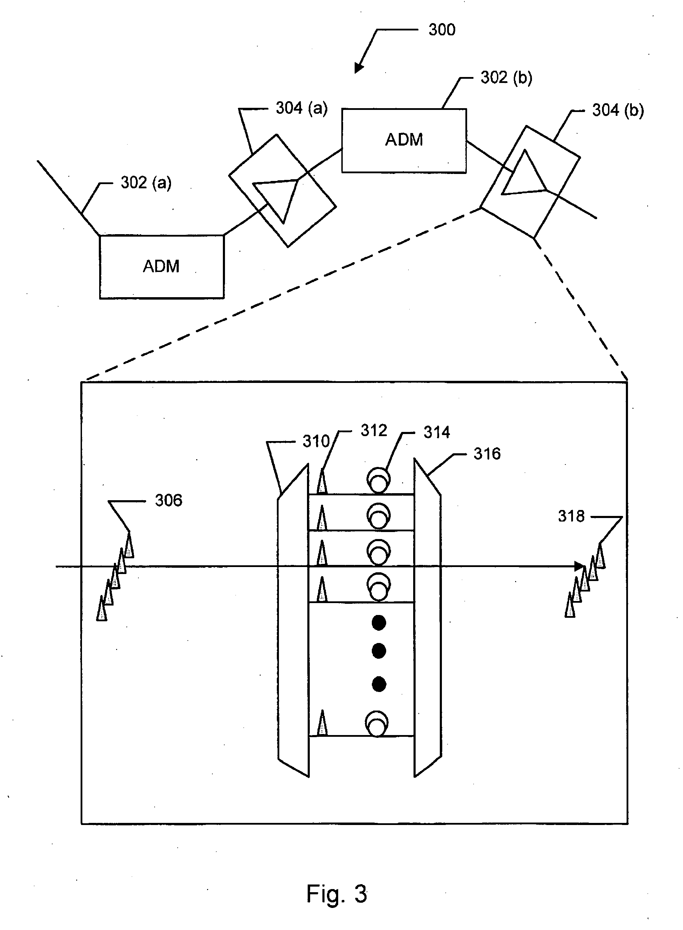

Figure 3 illustrates an exemplary optical signal equalizer. The signal equalizer has been described in the context of an arrangement 300 of add/drop multiplexers (ADMs) in an optical communication system. The arrangement includes a plurality of add/drop multiplexers 302(a) and 302 (b). Signal equalizers 304(a) and 304(b) are placed after each of the ADMs 302(a) and 302 (b). Figure 3 also shows an exploded view of the signal regenerator 304(b) according to an implementation. It may be noted that the arrangement as shown in figure 3 is just one of the ways to arrange the signal regenerators in an optical communication system and consequently there may be numerous other arrangements possible without deviating from the principle of the disclosed systems and methods.

In a real transmission network, multiple wavelength channels (as in WDM, for instance) and several network nodes are implemented, where there may be reconfigurable ADMs (e.g. 302(a) and 302(b)). In such a situation, one or more of a plurality of different wavelength channels (i.e. optical signals at different wavelengths shown as 306 in figure 3) may be switched out before a network amplifier 308 leaving serious transients at the output of the network amplifier 308. In this case, the signal regenerator 304(b) includes an arrayed waveguide grating (AWG) multi-wavelength filter 310 configured to separate, or demultiplex, each of the plurality of individual wavelength channels 312 out of the amplified optical signal.

In a successive progression, each of the individual wavelength channels 312 (or optical signals) is separately passed through a plurality of non-linear waveguides 314 (e.g. a highly non-linear fiber) to obtain spectral broadening in response to excess power in the individual wavelength channels 312. The broadened spectral components are filtered in a reverse AWG 316, which filters and subsequently merges, or multiplex, the individual wavelength channels to obtain an equalized output optical signal 318. In an exemplary embodiment, the reverse AWG 316 includes a plurality optical band pass filters (e.g. 112). Each of the plurality of optical band pass filters is centered at the input signal center frequency and the input signal bandwidth corresponding to each of the individual wavelength channels being filtered. The equalized output optical signal 318 is transmitted through the optical fiber.

It may be appreciated that the above disclosed signal regenerator 304(a) and 304(b) enable regeneration of several channels, sharing an amplifier, in one sweep. Thus, multi-channel equalization may be performed on a per channel basis with the inclusion of arrayed waveguide grating (AWG).

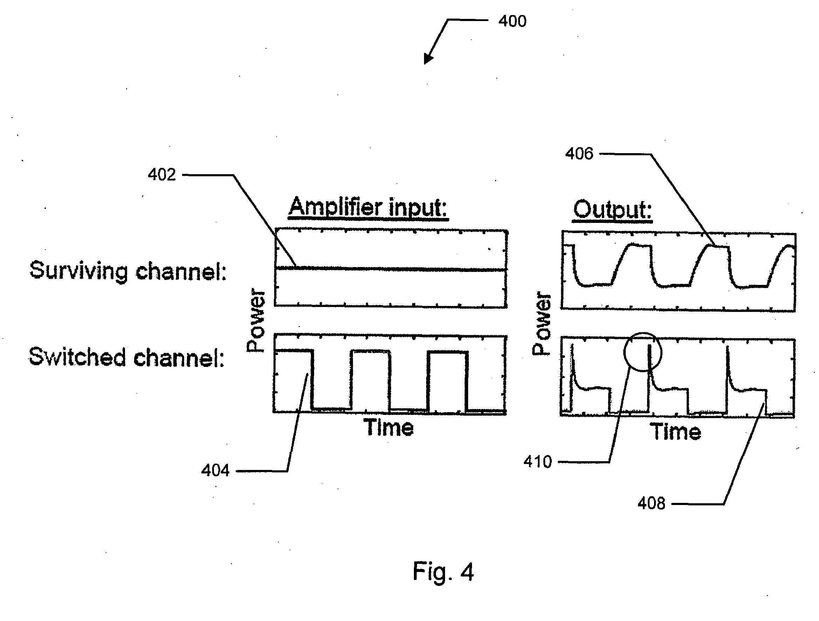

Figure 4 depicts a set of waveforms 400 to illustrate the way transient waveforms look like in a network situation. In particular, the figure shows input and output optical signal waveforms of a surviving channel and a switched channel before and after amplification. It may be noted that the surviving and the switched channel correspond to co-propagating wavelength division multiplexed (WDM) channels.

Typically a ROADM, located prior to a saturated optical amplifier (e.g. 208, 308) periodically adds and drops (switches on and off) one of the WDM channels. The resulting waveforms of the surviving and switched channels at the amplifier input and output shows the introduction of transients. It may be appreciated that the waveforms 400 are illustrative examples and have been calculated for a backward pumped dispersion compensating Raman amplifier (DCRA). Transients developed in an EDFA will have similar shapes, but will be more pronounced due to a higher typical saturation level in EDFAs. The waveforms 400 correspond to envelopes of the average signal power of the surviving and switched channels and include modulated data with a bit rate that is much faster than the time scale of the waveform transient.

According to figure 4, input signal waveforms at the input of an amplifier for the surviving and switched channel are shown by 402 and 404, respectively. The corresponding output amplified signal waveforms are shown by 406 and 408, respectively.

Due to inter-channel crosstalk through the saturated amplifier gain, power of the surviving channel at the output of the amplifier (406) is seen to oscillate out-of-phase with the output of the switched channel (408). Furthermore, the switched channel output after amplification includes a large power spike shown as 410, or overshoot, at the beginning of the waveform 408. The spike is a result of the unsaturated amplifier gain experienced by the leading edge of the pulse before the gain saturates (decreases). The time scale can vary depending on the type of amplifier e.g. Raman or EDFA, the relaxation time of the power spike 410 is typically between 10 - 100 µs.

### Exemplary Methods

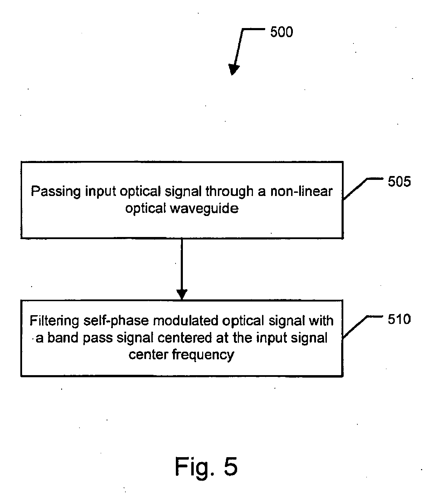

Figure 5 illustrates a method 500 for equalization of transients in an input optical signal. The input optical signal is characterized by an input signal center frequency and an input signal bandwidth. In an embodiment, the input signal corresponds to an amplified optical signal.

At block 505, the input optical signal is passed through a non-linear optical waveguide. In an implementation, the input optical signal (e.g. 104) is passed through the non-linear wave guide 108 to obtain a self-phase modulated optical signal 110.

At 50, the self-phase modulated optical signal is filtered by a band pass filter. In particular, the self-phase modulated signal 110 is fed to the band pass filter 112 to obtain the equalized output optical signal 114. The band pass filter 112 is centered at the input signal center frequency and has a band pass bandwidth similar to the input signal bandwidth. In an implementation, the format of the input optical signal corresponds to a return-to-zero format.

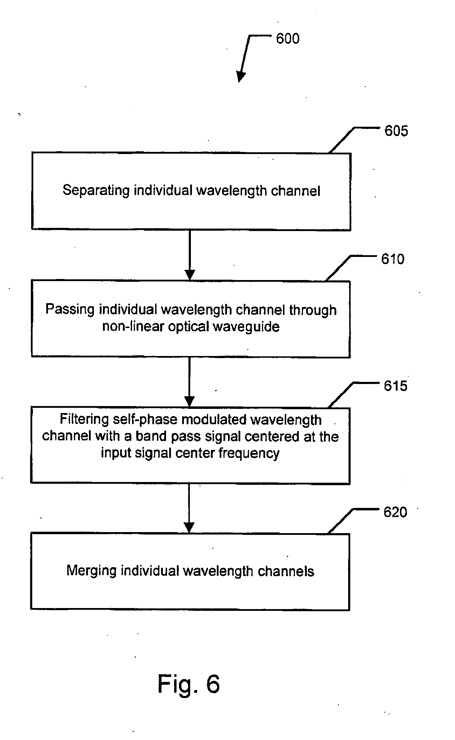

Figure 6 illustrates an exemplary method for signal regeneration of a plurality of optical wavelength channels. At 605, individual wavelength channels are separated from an input optical signal. In particular, the arrayed waveguide grating (AWG) multi-wavelength filter 310 separates out, or demultiplexes, individual wavelength channels 312 from the input optical signal 306. In an aspect of the method, the input optical signal corresponds to an amplified optical signal obtained by amplification of the plurality of wavelength channels 306 by a network amplifier 308. In an implementation, the network amplifier 308 corresponds to an optical amplifier (e.g. 208). At 610, the individual wavelength channels are passed through a non-linear waveguide. The individual wavelength channels 312 are passed through a plurality of non-linear optical waveguides 314 (also referred to as non-linear transmission medium) to obtain a plurality of self-phase modulated wavelength channels. The plurality of non-linear optical waveguides 314 is adapted to induce a self-phase modulation in each of the individual wavelength channels 312. In an exemplary embodiment, the plurality of non-linear optical waveguides is one of a photonic crystal highly non-linear fiber, a specially doped type of highly non linear fiber/waveguides based on Silica (SiO2), sulfur (S), selenium (Se), tellurium (Te) with arsenic (As), germanium (GE), antimony (Sb) and silicon (Si). At 615, individual self-phased modulated wavelength channels are filtered. The reverse arrayed waveguide grating filter 316 filters the transients in each of the plurality of self-phase modulated wavelength channels. At 620, individual wavelength channels are merged. The reverse arrayed waveguide grating filter 316 is configured to merge the individual wavelength channels to obtain a power equalized output optical signal. As discussed above, the reverse arrayed waveguide grating filter 316 includes a plurality of optical band pass filters (e.g. 112). Each of the plurality of optical band pass filters is centered at the input signal center frequency and the input signal bandwidth corresponding to each of the individual wavelength channels.

The disclosed systems and methods are very simple to implement and are based on a non-linear waveguide (in this case a fiber), where the frequency spectrum of an optical signal will broaden with an amount depending on the signal's intensity. The disclosed systems and methods ensure low power requirements and prevent unwanted wavelength conversion. The signal format of the input optical signal is limited to the return-to-zero (RZ) format, where a '1' is represented by a single pulse and a '0' is represented by a missing pulse in case of on-off keying (OOK) or as a phase-shifted pulse in case of phase-shift-keying (PSK).

The above-described embodiments work easily for a single channel scenario and can be parallelized to operate simultaneously on several channels. The disclosed systems and methods improve large transient induced sensitivity penalties, for example, by more than 5 dB. Furthermore, the transmission penalties from amplified spans are significantly reduced if the transients are equalized prior to transmission. This is due to the fact that nonlinear impairments are increased by the presence of transients and that uncontrolled amplifiers in the optical communication systems will cause existing power excursions and crosstalk to be further enhanced.

The advantages of the disclosed principle of equalization of power transients are its simple, stable and polarization insensitive operation principle. Furthermore, the transient equalizer benefits from being ultra-fast, which means that it is not inclined to patterning and that it can be extended to operate simultaneously on an arbitrary number of channels and with enough availability of power.

The present invention may be embodied in other specific forms without departing from its spirit or essential characteristics. The described embodiments are to be considered in all respects only as illustrative and not restrictive. The scope of the invention is, therefore, as indicated by the appended claims rather than by the foregoing description. All changes which come within the meaning and range of equivalency of the claims are to be embraced within their scope.

## Claims

1. A method for equalization of transients in an input optical signal, said input optical signal having an input signal center frequency and an input signal bandwidth, said method comprising:
- passing said input optical signal through a non-linear optical waveguide to obtain a self-phase modulated optical signal; and
- filtering said self-phase modulated optical signal by a band pass filter centered at said input signal center frequency and having a band pass bandwidth similar to said input signal bandwidth to obtain an equalized output optical signal.

2. A method according to claim 1, wherein format of said input optical signal corresponds to a return-to-zero format.

3. A method according to claims 1-2, wherein said method further comprises separating individual wavelength channels from said input optical signal prior to passing said input optical signal through said non-linear optical waveguide.

4. A method according to claim 3, wherein said separating comprises passing said input optical signal through an arrayed waveguide grating (AWG) multi-wavelength filter to obtain said individual wavelength channels.

5. A method according to claims 3-4 further comprising passing each of said individual wavelength channels through a plurality of non-linear optical waveguides to obtain a plurality of self-phase modulated optical signals, respectively.

6. A method according claims 4-5 further comprises passing each of said plurality of self-phase modulated optical signals through a reverse arrayed waveguide grating (AWG) thereby filtering and merging each of said plurality of self-phase modulated optical signals to obtain said equalized output optical signal.

7. A transient equalizer for removing transients from an input optical signal, said input optical signal having an input signal center frequency and an input signal bandwidth, said transient equalizer comprising:
- a non-linear transmission medium adapted to receive said input optical signal and to induce intensity dependent self-phase modulation in said input optical signal to obtain a self-phase modulated optical signal, said self-phase modulated signal having a broadened frequency spectrum; and
- an optical band pass filter adapted to filter said self-phase modulated optical signal to obtain a power equalized output optical signal, said optical band pass filter centered at said center frequency and having a band pass filter bandwidth similar to said input signal bandwidth.

8. A transient equalizer according to claim 7, wherein said non-linear transmission medium is a highly non-linear optical waveguide.

9. A transient equalizer according to claims 7-8, wherein said non-linear transmission medium is one of a photonic crystal highly non-linear fiber, a specially doped type of highly non-linear fiber/waveguides based on Silica (SiO2), sulfur (S), selenium (Se), tellurium (Te) with arsenic (As), germanium (GE), antimony (Sb) and silicon (Si).

10. A transient equalizer according to claims 7-9, wherein said non-linear transmission medium is **characterized by** a dispersion coefficient (D) being negative.

11. A transient equalizer according to claims 7-10, wherein said non-linear transmission medium is **characterized by** a length (L) lying in a range of 1200m to 2200m.

12. An optical signal equalizer adapted to regenerate a plurality of wavelength channels, each of said plurality of wavelength channels having an input signal center frequency and an input signal bandwidth, respectively, said optical signal equalizer comprising:
- an arrayed waveguide grating (AWG) multi-wavelength filter adapted to separate individual wavelength channels from said optical signal;
- a plurality of non-linear optical waveguides, each of said plurality of non-linear optical waveguides adapted to receive and pass each of said individual wavelength channels thereby inducing self-phase modulation in each of said individual wavelength channels to obtain a plurality of self-phase modulated wavelength channels;
- a reverse arrayed waveguide grating (AWG) filter adapted to:
■ filter out transients in each of said plurality of self-phase modulated wavelength channels; and
■ merging individual wavelength channels to obtain a power equalized output optical signal,
■ said reverse arrayed waveguide grating (AWG) filter comprising:
■ a plurality of optical band pass filters, each of said plurality of optical band pass filters being centered at said input signal center frequency and said input signal bandwidth corresponding to each of said individual wavelength channels.

13. An optical signal equalizer according to claim 12, wherein said plurality of non-linear optical waveguides is one of a photonic crystal highly non-linear fiber, a specially doped type of highly non-linear fiber/waveguides based on Silica (SiO2), sulfur (S), selenium (Se), tellurium (Te) with arsenic (As), germanium (GE), antimony (Sb) and silicon (Si).

14. An optical signal equalizer according to claims 12-13, wherein said plurality of non-linear optical waveguides is **characterized by** a dispersion coefficient (D) being negative.

15. An optical signal equalizer according to claims 12-15, wherein said plurality of non-linear optical waveguides is **characterized by** a length (L) lying in a range of 1200m to 2200m.
